# EUROPEAN PATENT APPLICATION

(11) **EP 4 715 330 A1**
(43) Date of publication of application: **25.03.2026**
(21) Application number: 23945226.1
(22) Date of filing: 31.10.2023
(51) Int. Cl.: G01C 21/08, G01C 25/00, B64F 5/60, B64F 1/22, B64F 1/24, B64U 70/90

(54) **AERIAL VEHICLE CALIBRATION DEVICE AND AERIAL VEHICLE STATION DEVICE HAVING SAME**

(30) Priority: 12.07.2023 KR 20230090410
(71) Applicant: WEFLO Inc., Daejeon 34430 (KR)
(72) Inventor: KIM, Yee Jung, Sejong 30098 (KR)
(74) Representative: AWA Sweden AB
(86) International application number: PCT/KR2023/017101
(87) International publication number: WO 2025/013997

(57) **Abstract**

The present invention relates to an aerial vehicle calibration device and an aerial vehicle station device having same, and rotates an aerial vehicle in a horizontal plane by means of an aerial vehicle rotating unit while a Z-axis correction first coil unit and a Z-axis correction second coil unit are positioned at upper and lower sides of the aerial vehicle and an XY-axis correction first coil unit and an XY-axis correction second coil unit are positioned at both sides of the aerial vehicle, so as to measure magnetic field change values of an electronic compass in the aerial vehicle with respect to three-axis directions, and compares, to three-axis magnetic field values of the earth, the measured magnetic field change values of the electronic compass with respect to the three-axis directions, so as to automatically calibrate a navigation sensor in the aerial vehicle, and thus improves calibration accuracy of the aerial vehicle and significantly reduces costs and time required for calibration work.

## Description

### Technical Field

The present disclosure relates to an aerial vehicle calibration device and an aerial vehicle station device having the same and, more particularly, to an aerial vehicle calibration device that automatically calibrates an onboard navigation sensor of an aerial vehicle and an aerial vehicle station device having the device.

### Background Art

In general, aerial vehicles are primarily used to fly through the air to transport passengers or cargo.

Small aerial vehicles such as drones, which use electric power to take off and land vertically, can be operated unmanned and do not require a runway for takeoff or landing. These advantages have led to their increasing adoption in various fields, including imaging and transportation.

In particular, growing concerns over environmental pollution and traffic congestion in urban areas have recently increased interest in air mobility. As technologies for small aerial vehicles, such as drones, capable of vertical takeoff and landing using electric motors have rapidly advanced, the development of air taxis and drone taxis has been progressing actively.

Vertical takeoff-and-landing (VTOL) aerial vehicles operate using a propulsion system that includes propellers and electric motors that drive the propellers, and are equipped with an electronic compass capable of detecting attitude, position, and orientation.

The electronic compass detects the attitude, position, and heading of an aerial vehicle during flight by using the Earth's three-axis magnetic field as a reference point. However, the Earth's changing magnetic field causes the reference point to drift over time.

Accordingly, the aerial vehicle undergoes periodic calibration to reset the reference point of the electronic compass and enable accurate detection of attitude, position, and heading.

Conventionally, aerial vehicle calibration is performed manually, with multiple operators physically handling and rotating an aerial vehicle.

The problem is that, because the calibration is carried out manually by multiple operators physically handling an aerial vehicle, accuracy is reduced and substantial time and cost are required for managing an aerial vehicle 101.

Especially, with the increasing size of aerial vehicles, manual calibration by multiple operators physically handling an aerial vehicle may become unfeasible, which significantly increases costs due to the additional personnel required.

An example of related art is Korean Patent Application Publication No. 2019-0116249, entitled "METHOD, APPARATUS, AND SYSTEM FOR GYROSCOPE SCALE CALIBRATION" (Published on October 14, 2019).

### Disclosure

### Technical Problem

The present disclosure aims to provide an aerial vehicle calibration device that automatically calibrates the onboard navigation sensors of an aerial vehicle and an aerial vehicle station device having the device.

### Technical Solution

In order to achieve the above mentioned objectives, an embodiment of an aerial vehicle calibration device according to the present disclosure includes: an aerial vehicle rotation portion on which an aerial vehicle is seated and configured to rotate the aerial vehicle to change an axial direction of an onboard electronic compass in the aerial vehicle; a first coil portion for Z-axis calibration and a second coil portion for Z-axis calibration disposed to face each other below and above the aerial vehicle seated on the aerial vehicle rotation portion; a first coil portion for XY-axis calibration and a second coil portion for XY-axis calibration disposed to face each other on opposite sides of the aerial vehicle seated on the aerial vehicle rotation portion; a geomagnetic sensor configured to measure an Earth's three-axis magnetic field; and a calibration controller configured to calibrate an onboard navigation sensor in the aerial vehicle by comparing three-axis magnetic field variation values from the electronic compass with Earth's three-axis magnetic field values measured by the geomagnetic sensor.

In the present disclosure, the aerial vehicle rotation portion may include a rotary table configured to rotate the seated aerial vehicle in a horizontal plane and on which the first coil portion for XY-axis calibration is placed, wherein an upper support having the second coil portion for Z-axis calibration may be disposed over the rotary table.

The aerial vehicle calibration device according to the present disclosure may further include a first side support and a second side support positioned on opposite sides of the rotary table and configured to have the first coil portion for XY-axis calibration and the second coil portion for XY-axis calibration, respectively, wherein the upper support may be supported at a predetermined height, with opposite ends thereof connected to upper ends of the first and second side supports.

In the aerial vehicle calibration device according to the present disclosure, by means of the aerial vehicle rotation portion, an X-axis of the electronic compass may be aligned with an axial direction of a magnetic field formed between the first and second coil portions for XY-axis calibration before an X-axis magnetic field variation value of the electronic compass induced by the magnetic field is transmitted to the calibration controller, and after rotating the aerial vehicle by 90 degrees by means of the aerial vehicle rotation portion to align a Y-axis of the electronic compass with the axial direction of the magnetic field formed between the first and second coil portions for XY-axis calibration, a Y-axis magnetic field variation value of the electronic compass induced by the magnetic field may be transmitted to the calibration controller.

In the present disclosure, the calibration controller may calculate calibration values based on Z-axis, X-axis, and Y-axis magnetic field variation amounts, may calculate a relative difference for each axis using the calibration values and Earth's X-axis, Y-axis, and Z-axis magnetic field values, measured by the geomagnetic sensor, and may transmit the calibration values and relative difference values to an onboard navigation device of the aerial vehicle, and then the navigation device may calibrate the navigation sensor using the received calibration values and relative difference values.

In the present disclosure, the first and second side supports may be rotatably disposed on opposite sides of a base seating portion, on which the rotary table is rotatably mounted, via hinge shafts, and a support rotation portion configured to rotate the first and second side supports about the hinge shafts to open a space above the rotary table or to cover the space above the rotary table with the upper support may be further included.

The aerial vehicle calibration device according to the present disclosure may further include a base seating portion on which the rotary table is rotatably mounted and which is movable by a traveling portion.

The aerial vehicle calibration device according to the present disclosure may further include: a coil lifting/lowering portion provided on at least one of the first and second side supports and configured to raise and lower the upper support having the second coil portion for Z-axis calibration; and a coil-spacing adjustment portion configured to move at least one of the first and second side supports to widen of narrow a spacing between the first and second side supports, wherein the upper support may include: a central coil support member on which the second coil portion for Z-axis calibration is positioned; and a first movement support member and a second movement support member partially inserted so as to be retractable on opposite sides of the central coil support member and respectively connected to the first side support and the second side support.

In the present disclosure, the aerial vehicle rotation portion may include: the rotary table on which the aerial vehicle is seated and rotated; a table support including a rotary motor for rotating the rotary table; and a support moving portion for moving the table support forward and backward.

The aerial vehicle calibration device according to the present disclosure may further include a base support portion on which the aerial vehicle rotation portion is disposed, wherein the coil-spacing adjustment portion may include: a moving screw rotatably disposed inside the base support portion in a widthwise direction, passing through the first and second side supports and screw-coupled thereto in opposite directions; and a screw rotation motor configured to rotate the moving screw.

In the present disclosure, the first side support may include: a first side support member provided with the first coil portion for XY-axis calibration; and a first side lifting/lowering portion for raising and lowering the first side support member, whereas the second side support may include: a second side support member provided with the second coil portion for XY-axis calibration; and a second side lifting/lowering portion for raising and lowering the second side support member.

In order to achieve the above mentioned objectives, an embodiment of an aerial vehicle station device according to the present disclosure includes: a station housing portion through an open top of which an aerial vehicle takes off and lands, and provided with a rotary table, rotatable in a horizontal plane, and a pair of sidewall portions, with each unit of the pair erected on each side of the rotary table; a station open/close portion configured to open and close the open top of the station housing portion; a first coil portion for XY-axis calibration and a second coil portion for XY-axis calibration positioned to face each other on the sidewall portions; a first coil portion for Z-axis calibration provided on the rotary table; a second coil portion for Z-axis calibration positioned on the station open/close portion so as to face the first coil portion for Z-axis calibration; a geomagnetic sensor configured to measure an Earth's three-axis magnetic field; and a calibration controller configured to calibrate an onboard navigation sensor in the aerial vehicle by comparing three-axis magnetic field variation values from an electronic compass in the aerial vehicle with Earth's three-axis magnetic field values measured by the geomagnetic sensor.

In the present disclosure, the rotary table may be provided with a wireless charging portion for charging an aerial vehicle landed thereon.

In the aerial vehicle station device according to the present disclosure, by means of the rotary table, an X-axis of the electronic compass may be aligned with an axial direction of a magnetic field formed between the first and second coil portions for XY-axis calibration before an X-axis magnetic field variation value of the electronic compass induced by the magnetic field is transmitted to the calibration controller, and after rotating the aerial vehicle by 90 degrees by means of the rotary table to align a Y-axis of the electronic compass with the axial direction of the magnetic field formed between the first and second coil portions for XY-axis calibration, a Y-axis magnetic field variation value of the electronic compass induced by the magnetic field may be transmitted to the calibration controller.

In the present disclosure, the calibration controller may calculate calibration values based on Z-axis, X-axis, and Y-axis magnetic field variation amounts, may calculate a relative difference for each axis using the calibration values and Earth's X-axis, Y-axis, and Z-axis magnetic field values, measured by the geomagnetic sensor, and may transmit the calibration values and relative difference values to an onboard navigation device of the aerial vehicle, and then the navigation device calibrates the navigation sensor using the received calibration values and relative difference values.

In the present disclosure, the sidewall portions may be erected and positioned to surround a periphery of a takeoff/landing portion on which the rotary table is rotatably mounted, and the station open/close portion may include: a housing cover member that is seated on upper parts of the sidewall portions to cover the open top of the station housing portion, and on which the second coil portion for Z-axis calibration disposed; a pair of cover rotation bracket members, with each unit of the pair connected to each lateral end of the housing cover member and positioned to overlap each side surface of the station housing portion; a cover rotation portion configured to rotate the cover rotation bracket members; and a cover lifting/lowering portion configured to move the housing cover member up and down from the top of the station housing portion.

In the present disclosure, the station open/close portion may include a pair of cover door members rotatable by a door rotation device to open and close the open top of the station housing portion, wherein the second coil portion for Z-axis calibration may be provided in parts distributed respectively on the cover door members, and the cover door members may be respectively provided with, on facing surfaces thereof, a plurality of first coil connection terminals and a plurality of second coil connection terminals to connect divided coils.

### Advantageous Effects

According to the present disclosure, it is possible to automatically calibrate the navigation sensors of an aerial vehicle, thereby enhancing calibration accuracy and significantly reducing the time and cost associated with calibration procedures.

### Description of Drawings

FIG. 1 is a perspective view showing an embodiment of an aerial vehicle calibration device according to the present disclosure.
FIG. 2 is a plan view showing an embodiment of an aerial vehicle calibration device according to the present disclosure.
FIGS. 3 and 4 are perspective views showing another embodiment of an aerial vehicle calibration device according to the present disclosure.
FIG. 5 is a front view showing still another embodiment of an aerial vehicle calibration device according to the present disclosure.
FIG. 6 is a perspective view showing an embodiment of an aerial vehicle station device according to the present disclosure.
FIG. 7 is a cross-sectional view showing an embodiment of an aerial vehicle station device according to the present disclosure.
FIG. 8 is a perspective view showing another embodiment of an aerial vehicle station device according to the present disclosure.
FIG. 9 is a cross-sectional view showing another embodiment of an aerial vehicle station device according to the present disclosure.
FIG. 10 is a perspective view showing an example of inspecting an open/close actuator with an aerial vehicle inspection portion in another embodiment of an aerial vehicle station device according to the present disclosure.
FIG. 11 is a cross-sectional view showing an example in which a station housing portion is closed by a station open/close portion in another embodiment of an aerial vehicle station device according to the present disclosure.

### *Description of Reference Numerals

1: aerial vehicle 10: coil support
10a: upper support 10b: first side support
10c: second side support 11: first coil portion for Z-axis calibration
12: second coil portion for Z-axis calibration 12a: first coil connection terminal
12b: second coil connection terminal 13: first coil portion for XY-axis calibration
14: second coil portion for XY-axis calibration 15a: central coil support member
15b: first movement support member 15c: second movement support member
16a: first side support member 16b: first side lifting/lowering portion
17a: second side support member 17b: second side lifting/lowering portion
20: aerial vehicle rotation portion 21: rotary table
22: base seating portion 23: traveling portion
23a: travel wheel portion 23b: travel rail portion
24: table support 25: support moving portion
30: geomagnetic sensor 40: calibration controller
50: coil current-applying portion 60: support rotation portion
70: coil lifting/lowering portion 80: coil-spacing adjustment portion
81: moving screw 82: screw rotation motor
90: base support portion 100: station housing portion
100a: charging portion 101: sidewall portion
110: takeoff/landing portion 120: support pillar portion
200: aerial vehicle inspection portion 210: inspection sensor
211: drive portion inspection sensor 211a: magnetic field detector
211b: drive portion vibration detector 211c: acoustic detector
220: abnormality-determination controller 230: thermal imaging camera portion
240: type-identification camera portion 250: sensor housing portion
260: exterior inspection camera portion 261: inspection camera
262: camera moving portion 300: station open/close portion
301: housing cover member 302: cover rotation bracket member
303: cover rotation portion 304: cover lifting/lowering portion
310: open/close cover portion 311: cover door member
311a: rotation bracket 311b: side cover panel
311c: upper cover panel 311d: sensor mounting surface
320: open/close actuator 321: door rotation device
322: door lifting/lowering device
400: sensor moving portion 410: first sensor moving device
420: second sensor moving device

### Best Mode

Hereinafter, the present disclosure will be described in more detail.

Preferred embodiments of the present disclosure will be described in detail with reference to the accompanying drawings. Prior to the detailed description of the present disclosure, it should be noted that the terms and words used in this specification and the claims are not to be interpreted in a strictly literal or dictionary sense. Accordingly, the embodiments described in this specification and the configurations shown in the drawings merely illustrate the most preferred embodiments of the present disclosure and do not encompass the full scope of the technical idea of the invention. It should be understood that various equivalents and modifications that can replace the preferred embodiments may exist as of the filing date of the present application.

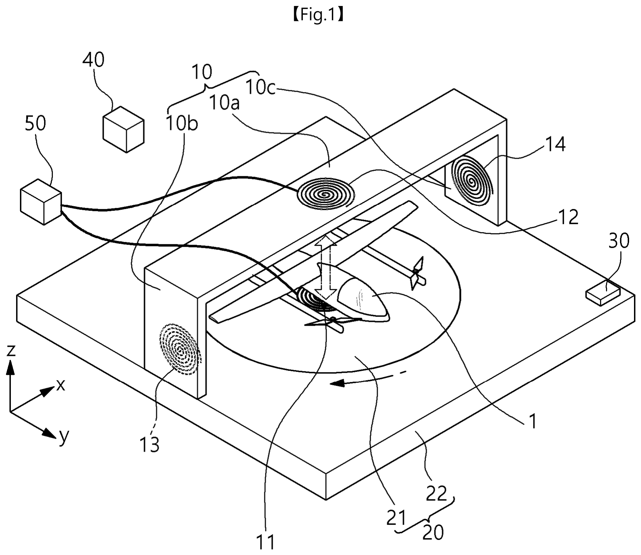

FIG. 1 is a perspective view showing an embodiment of an aerial vehicle calibration device according to the present disclosure. Referring to FIG. 1, a preferred embodiment of an aerial vehicle calibration device according to the present disclosure will be described in detail below.

An aerial vehicle 1 equipped with an electronic compass calibrated by an aerial vehicle calibration device according to the present disclosure is, as an example, an unmanned or manned aerial vehicle capable of vertical takeoff and landing. To be specific, the aerial vehicle 1 is an unmanned or manned aerial vehicle, such as a drone, capable of vertical takeoff and landing, using a drive system including an electric motor and a propeller rotated by the electric motor.

An embodiment of an aerial vehicle calibration device according to the present disclosure includes: a first coil portion for Z-axis calibration 11 and a second coil portion for Z-axis calibration 12 respectively located below and above the aerial vehicle 1.

In addition, first and second coil portions for XY-axis calibration 13 and 14 are respectively positioned on opposite sides of the aerial vehicle 1.

Between the first and second coil portions for XY-axis calibration 13 and 14, an aerial vehicle rotation portion 20 is provided to rotate the aerial vehicle 1 so as to change an axial orientation of the onboard electronic compass in the aerial vehicle 1.

The aerial vehicle rotation portion 20 includes a rotary table 21 on which the aerial vehicle 1 is seated and which rotates the seated aerial vehicle 1 in a horizontal plane.

The rotary table 21 includes a table member on which the aerial vehicle 1 is seated and a table rotary motor that rotates the table member, and rotates the table member about a rotation axis perpendicular to the ground.

The rotary table 21 is provided with the first coil portion for Z-axis calibration 11 positioned under the aerial vehicle 1.

An upper support 10a is provided above the rotary table 21 and is equipped with the second coil portion for Z-axis calibration 12. The second coil portion for Z-axis calibration 12 provided on the upper support 10a is positioned vertically in line with the second coil portion for Z-axis calibration 11 on the rotary table 21.

A gap (space) is provided between the upper support 10a and the rotary table 21 so that the aerial vehicle 1 may be placed on the rotary table 21.

The first coil portion for Z-axis calibration 11 and the second coil portion for Z-axis calibration 12 are positioned on a vertical line, and when an electric current is applied, generate a magnetic field in the Z-axis direction.

In addition, on opposite sides of the rotary table 21, a first side support 10b provided with the first coil portion for XY-axis calibration 13 and a second side support 10c provided with the second coil portion for XY-axis calibration 14 are erected.

The first coil portion for XY-axis calibration 13 and the second coil portion for XY-axis calibration 14 respectively provided on the first side support 10b and the second side support 10c face each other and are aligned on a straight line, generating a magnetic field along the line when an electric current is applied.

The rotary table 21 may rotate the aerial vehicle 1 seated thereon in a horizontal plane between the first coil portion for XY-axis calibration 13 and the second coil portion for XY-axis calibration 14, so that the X-axis of the electronic compass is aligned with the straight line connecting the facing first and second coil portions 13 and 14.

In addition, the rotary table 21 may rotate the aerial vehicle 1 seated thereon in a horizontal plane between the first coil portion for XY-axis calibration 13 and the second coil portion for XY-axis calibration 14, so that the Y-axis of the electronic compass is aligned with the straight line connecting the facing first and second coil portions 13 and 14.

An embodiment of an aerial vehicle calibration device according to the present disclosure may further include a coil current-applying portion 50 configured to supply an electric current to the first coil portion for Z-axis calibration 11 and the second coil portion for Z-axis calibration 12 and to the first coil portion for XY-axis calibration 13 and the second coil portion for XY-axis calibration 14.

The coil current-applying portion 50 supplies current to the first coil portion for Z-axis calibration 11 and the second coil portion for Z-axis calibration 12 to generate a magnetic field in the Z-axis direction at the electronic compass of the aerial vehicle 1, and supplies current to the first coil portion for XY-axis calibration 13 and the second coil portion for XY-axis calibration 14 to generate a magnetic field along a straight line, which can be aligned with the X-axis or Y-axis of the electronic compass.

In addition, an embodiment of an aerial vehicle calibration device according to the present disclosure may include: a geomagnetic sensor 30 for measuring the Earth's three-axis magnetic field, which serves as a reference for the electronic compass; and a calibration controller 40 that receives the magnetic field variation data from the electronic compass in the aerial vehicle 1.

The geomagnetic sensor 30 is a known sensor for measuring the magnetic field values along the three axes of the Earth, that is, X, Y, and Z axes, and a detailed description thereof is omitted.

As an example, the geomagnetic sensor 30 is mounted on a base seating portion 22 including a hollow portion in which the rotary table 21 is rotatably positioned.

As an example, the rotary table 21 is rotatably positioned within a circular hollow portion provided in the base seating portion 22, and the first side support 10b and the second side support 10c are vertically mounted on opposite sides of the base seating portion 22 and positioned facing each other.

In addition, as an example, opposite ends of the upper support 10a are connected to the upper ends of the first side support 10b and the second side support 10c, and are supported at a predetermined height.

The calibration controller 40 calibrates a navigation device of the aerial vehicle 1 by receiving the three-axis values of the Earth's magnetic field measured by the geomagnetic sensor 30 and the three-axis values from the electronic compass inside the aerial vehicle 1.

As an example, the calibration controller 40 receives the three-axis values of the Earth's magnetic field measured by the geomagnetic sensor 30 and the three-axis values from the electronic compass inside the aerial vehicle 1 via wireless communication.

To be specific, the method for calibrating the electronic compass, which calibrates the navigation device of the aerial vehicle 1 by means of the calibration controller 40, is as follows.

The calibration controller 40 receives an X-axis first magnetic field value, a Y-axis first magnetic field value, and a Z-axis first magnetic field value measured along the three axes, that is, the X, Y, and Z axes of the electronic compass inside the aerial vehicle 1, and the three-axis magnetic field values of the Earth measured by the geomagnetic sensor 30, that is, an Earth's X-axis magnetic field value, an Earth's Y-axis magnetic field value, and an Earth's Z-axis magnetic field value.

While the aerial vehicle 1 is seated on the rotary table 21, an electric current is applied to the first coil portion for Z-axis calibration 11 and the second coil portion for Z-axis calibration 12 to generate a magnetic field in the Z-axis direction between the two coil portions. The Z-axis second magnetic field value of the electronic compass, produced by the Z-axis magnetic field formed between the first and second coil portions for Z-axis calibration 11 and 12, is then transmitted to the calibration controller 40.

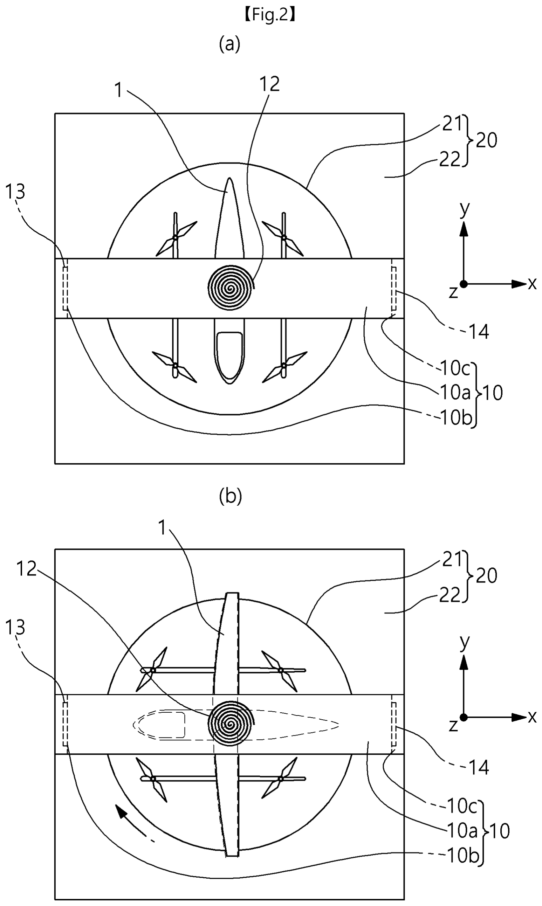

In addition, as shown in FIG. 2(a), with the aerial vehicle 1 seated on the rotary table 21, the X-axis of the electronic compass of the aerial vehicle 1 is positioned to align with the axial direction of a magnetic field formed between the first coil portion for XY-axis calibration 13 and the second coil portion for XY-axis calibration 14. An electric current is then applied to the first and second coil portions for XY-axis calibration 13 and 14, and the X-axis second magnetic field value of the electronic compass, caused by the magnetic field formed between the first and second coil portions for XY-axis calibration 13 and 14, is transmitted to the calibration controller 40.

After transmitting the X-axis second magnetic field value of the electronic compass to the calibration controller 40, as shown in FIG. 2(b), the rotary table 21 is rotated by 90 degrees so that the Y-axis of the electronic compass is aligned with the axial direction of the magnetic field formed between the first and second coil portions for XY-axis calibration 13 and 14. An electric current is then applied to the first and second coil portions for XY-axis calibration 13 and 14, and the Y-axis second magnetic field value of the electronic compass, caused by the magnetic field formed between the first and second coil portions for XY-axis calibration 13 and 14, is transmitted to the calibration controller 40.

Referring to FIG. 2(a) and FIG. 2(b), the first and second coil portions for XY-axis calibration 13 and 14 generate a magnetic field fixed in the X-axis direction, and as shown in FIG. 2(a), when the front and rear ends of the aerial vehicle 1 are positioned in the Y-axis direction, the X-axis of the electronic compass of the aerial vehicle 1 is aligned with the X-axis magnetic field formed between the first and second coil portions for XY-axis calibration 13 and 14, thereby varying the magnetic field along the X-axis of the electronic compass.

In addition, as shown in FIG. 2(b), when the rotary table 21 is rotated by 90 degrees so that the front and rear ends of the aerial vehicle 1 are positioned in the X-axis direction, the Y-axis of the electronic compass of the aerial vehicle 1 is aligned with the X-axis magnetic field formed between the first and second coil portions for XY-axis calibration 13 and 14, thereby varying the magnetic field along the Y-axis of the electronic compass.

The calibration controller 40 compares the Z-axis first magnetic field value with the Z-axis second magnetic field value to derive a Z-axis magnetic field change value, which is the difference between the two. Similarly, the calibration controller 40 compares the X-axis first and second magnetic field values to derive an X-axis magnetic field change value, and compares the Y-axis first and second magnetic field values to derive a Y-axis magnetic field change value.

The calibration controller 40 calculates calibration values based on the Z-axis, X-axis, and Y-axis magnetic field change values, and then calculates the relative difference for each axis using the calibration values and the three-axis magnetic field values of the Earth, that is, the Earth's X-axis, Y-axis, and Z-axis magnetic field values, measured by the geomagnetic sensor 30.

The calibration portion transmits the calibration values and relative difference values to the navigation device of the aerial vehicle 1, and the navigation device calibrates the navigation sensors using the received calibration values and relative difference values.

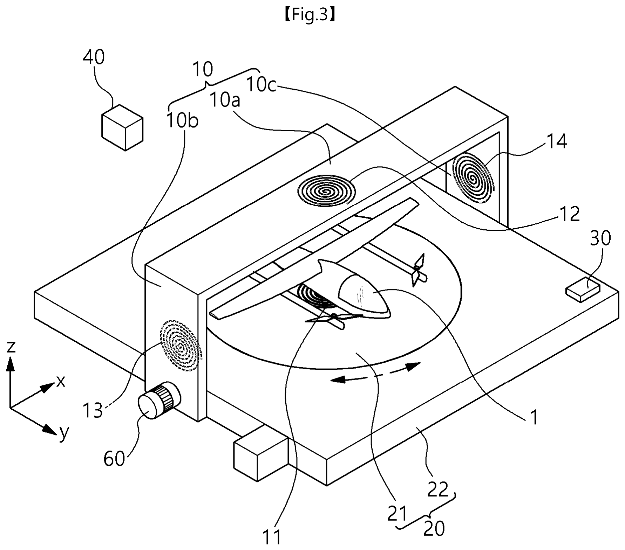

FIG. 3 is a perspective view showing another embodiment of the aerial vehicle calibration device according to the present disclosure. To be specific, referring to FIG. 3, the coil support 10 includes the upper support 10a and the first and second side supports 10b and 10c positioned at opposite ends of the upper support 10a, and another embodiment of the aerial vehicle calibration device according to the present disclosure further includes a support rotation portion 60 that opens and closes the space above the rotary table 21 by rotating the coil support 10.

The coil support 10 is configured such that the first and second side supports 10b and 10c positioned at opposite ends of the base seating portion 22 provided with the rotary table 21 so as to be rotatable about a hinge shaft, and the support rotation portion 60 rotates the first and second side supports 10b and 10c about the hinge shaft to either open the space above the rotary table 21 or cover the space above the rotary table 21 with the upper support 10a.

The coil support 10 is rotated by the operation of the support rotation portion 60, causing the first and second side supports 10b and 10c to be laid down, thereby opening the space above the rotary table 21 and allowing the aerial vehicle 1 to vertically take off and land using the upper surface of the rotary table 21.

In addition, with the aerial vehicle 1 landed on the rotary table 21, the coil support 10 is rotated by the operation of the support rotation portion 60, causing the first and second side supports 10b and 10c to be stood up so that the upper support 10a covers the landed aerial vehicle 1 and is positioned vertically above the rotary table 21.

Once the first side support 10b and the second side support 10c are stood up, the first and second coil portions for XY-axis calibration 13 and 14 are positioned facing each other on opposite sides of the aerial vehicle 1, and the first and second coil portions for Z-axis calibration 11 and 12 are positioned facing each other below and above the aerial vehicle 1, enabling calibration of the electronic compass of the aerial vehicle 1.

The calibration method for performing calibration of the electronic compass of the aerial vehicle 1 using the first and second coil portions for XY-axis calibration 13 and 14, the first and second coil portions for Z-axis calibration 11 and 12, the rotary table 21, and the calibration controller 40 is the same as described above and will not be redundantly described.

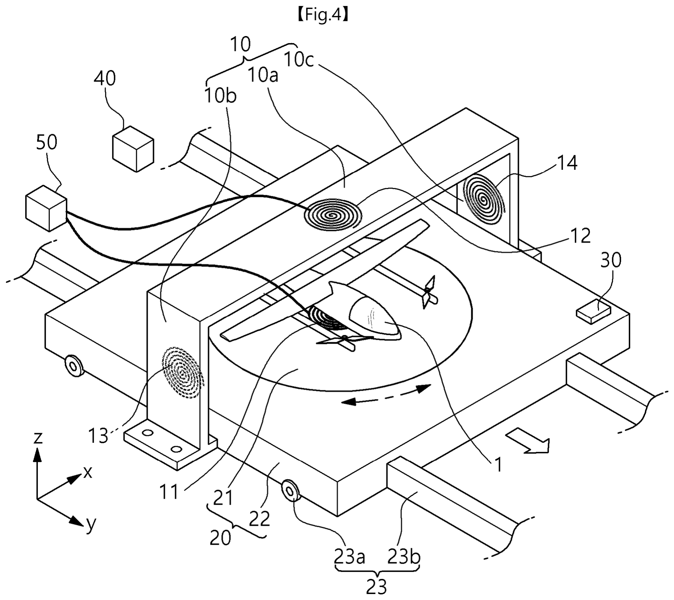

FIG. 4 is a perspective view showing another embodiment of the aerial vehicle calibration device according to the present disclosure. To be specific, FIG. 4 shows an example in which a traveling portion 23 is provided on the base seating portion 22 equipped with the rotary table 21.

The base seating portion 22 may be moved by the traveling portion 23 from a position away from the coil support 10, which includes the upper support 10a and the first and second side supports 10b and 10c located at opposite ends of the upper support 10a, to a position under the upper support 10a.

As an example, the traveling portion 23 includes a traveling wheel portion 23a provided on the base seating portion 22 and rotated by a motor to move the base seating portion 22.

In addition, the traveling portion 23 further includes a travel rail portion 23b to which the base seating portion 22 is movably coupled and which guides the movement path of the base seating portion 22.

The base seating portion 22 is movably coupled to the travel rail portion 23b and may move along the travel rail portion 23b to accurately position itself within the coil support 10.

The base seating portion 22 may move away from the coil support 10 to open the space above the rotary table 21, allowing the aerial vehicle 1 to perform vertical take-off and landing using the upper surface of the rotary table 21.

That is, the base seating portion 22 may be moved by the traveling portion 23 so that the rotary table 21 is positioned under the upper support 10a, or the base seating portion 22 may be moved by the traveling portion 23 away from the coil support 10 so that the upper surface of the rotary table 21 is open.

When the base seating portion 22 is moved away from the coil support 10 and the space above the rotary table 21 is open, the aerial vehicle 1 is able to perform vertical take-off and landing on the rotary table 21, and the aerial vehicle 1 is able to land on the upper surface of the rotary table 21.

When the aerial vehicle 1 lands on the upper surface of the rotary table 21, the base seating portion 22 is moved by the traveling portion 23 to position within the coil support 10, so that the rotary table 21 and the upper support 10a are positioned on a vertical line between the first side support 10b and the second side support 10c.

When the aerial vehicle 1, landed on the rotary table 21, is moved to a position within the coil support 10, the first and second coil portions for XY-axis calibration 13 and 14, positioned facing each other on opposite sides of the aerial vehicle 1, and the first and second coil portions for Z-axis calibration 11 and 12, positioned facing each other below and above the aerial vehicle 1, enable calibration of the electronic compass of the aerial vehicle 1.

The calibration method for performing calibration of the electronic compass of the aerial vehicle 1 using the first and second coil portions for XY-axis calibration 13 and 14, the first and second coil portions for Z-axis calibration 11 and 12, the rotary table 21, and the calibration controller 40 is the same as described above and will not be redundantly described.

Once the calibration of the electronic compass of the aerial vehicle 1 is completed, the base seating portion 22 is moved by the traveling portion 23 away from the coil support 10 so that the space above and the upper surface of the rotary table 21 are open, allowing the aerial vehicle 1 to take off and fly vertically.

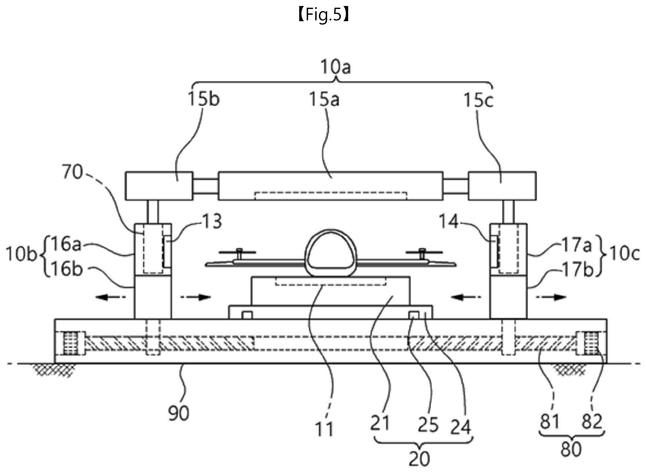

FIG. 5 is a front view showing still another embodiment of the aerial vehicle calibration device according to the present disclosure. Referring to FIG. 5, still another embodiment of the aerial vehicle calibration device according to the present disclosure further includes: a coil lifting/lowering portion 70 provided on at least one of the first and second side supports 10b and 10c for raising and lowering the upper support 10a, which is equipped with the second coil portion for Z-axis calibration 12; and a coil-spacing adjustment portion 80 that moves at least one of the first and second side supports 10b and 10c to widen or narrow the gap between the first and second side supports 10b and 10c.

The upper support 10a may include: a central coil support member 15a on which the second coil portion for Z-axis calibration 12 is positioned; and a first movement support member 15b and a second movement support member 15c partially inserted so as to be retractable on opposite sides of the central coil support member 15a and respectively connected to the first side support 10b and the second side support 10c.

The first movement support member 15b and the second movement support member 15c are partially inserted or retracted on opposite sides of the central coil support member 15a when the first and second side supports 10b and 10c are moved by the coil-spacing adjustment portion 80, thereby stably supporting the position of the central coil support member 15a on which the second coil portion for Z-axis calibration 12 is located.

The aerial vehicle rotation portion 20 includes: the rotary table 21 on which the aerial vehicle 1 is seated and rotated; a table support 24 including a rotary motor for rotating the rotary table 21; and a support moving portion 25 for moving the table support 24 forward and backward.

In addition, still another embodiment of the aerial vehicle calibration device according to the present disclosure further includes: a base support portion 90 on whose upper surface the aerial vehicle rotation portion 20 is positioned and which is provided with the coil-spacing adjustment portion 80.

The support moving portion 25 is located on the base support portion 90 and moves the rotary table 21 and the table support 24 forward and backward, so that the rotary table 21 may be positioned between the first and second side supports 10b and 10c and under the upper support 10a or moved away from under the upper support 10a.

The rotary table 21 may be positioned away from under the upper support 10a so that the space thereabove is open, allowing the aerial vehicle 1 to perform vertical take-off and landing using the upper surface of the rotary table 21.

The support moving portion 25 is, as an example, a ball-screw type linear actuator, but may be implemented in various modified forms using known linear motion structures that convert the rotational force of a motor into linear movement, such as a rack-and-pinion structure including a rack and a pinion gear rotated by a motor to engage with the rack, or known traveling structures including a drive wheel rotated by a motor.

That is, the rotary table 21 may be moved by the support moving portion 25 to a position under the upper support 10a on a vertical line so that calibration of the aerial vehicle 1 is performed, or may be positioned away from the upper support 10a to open the space thereabove to allow the aerial vehicle 1 to take off and land.

The coil-spacing adjustment portion 80 may move the first and second side supports 10b and 10c toward each other to narrow a gap therebetween, or in opposite directions to widen the gap.

To be specific, the coil-spacing adjustment portion 80 may include: a moving screw 81 rotatably positioned in the width direction inside the base support portion 90, screwed through the first side support 10b and the second side support 10c such that the first and second side supports 10b and 10c are threaded in opposite directions; and a screw rotary motor 82 that rotates the moving screw 81.

The first side support 10b and the second side support 10c are threaded in opposite directions on the moving screw 81, so that when the moving screw 81 rotates, the first and second side supports 10b and 10c move toward each other or in opposite directions to narrow or widen the gap therebetween.

As an example, one of the first and second side supports 10b and 10c is threaded in a lefthand direction on the moving screw 81, and the other is threaded in a right-hand direction on the moving screw 81. It should be noted that the directions may be reversed.

The coil-spacing adjustment portion 80 moves the first and second side supports 10b and 10c either toward each other or in opposite directions to adjust the gap therebetween according to the type of the aerial vehicle 1, thereby setting the distance between the aerial vehicle 1 and the first coil portion for XY-axis calibration 13 and the distance between the aerial vehicle 1 and the second coil portion for XY-axis calibration 14 to appropriate intervals for performing calibration.

In addition, the upper support 10a is raised and lowered by the coil lifting/lowering portion 70, allowing height adjustment according to the type of the aerial vehicle 1. The coil lifting/lowering portion 70 may appropriately set the distance between the aerial vehicle 1 and the second coil portion for Z-axis calibration 12 during calibration based on the type of the aerial vehicle 1.

The first side support 10b includes: a first side support member 16a provided with the first coil portion for XY-axis calibration 13; and a first side lifting/lowering portion 16b for raising and lowering the first side support member 16a. The second side support 10c includes: a second side support member 17a provided with the second coil portion for XY-axis calibration 14 and a second side lifting/lowering portion 17b for raising and lowering the second side support member 17a.

The first side support member 16a and the second side support member 17a are raised and lowered by the first side lifting/lowering portion 16b and the second side lifting/lowering portion 17b, respectively.

The first side lifting/lowering portion 16b and the second side lifting/lowering portion 17b raise and lower the first side support member 16a and the second side support member 17a, respectively, during the calibration operation, thereby allowing the heights of the first and second coil portions for XY-axis calibration 13 and 14 to be appropriately set according to the type of the aerial vehicle 1.

The coil lifting/lowering portion 70, the first side lifting/lowering portion 16b, and the second side lifting/lowering portion 17b are, as an example, hydraulic cylinders, but may be implemented in various modified forms using known lifting/lowering devices such as ball-screw type linear actuators or rack-and-pinion structures including a rack and a pinion gear rotated by a motor to convert the motor's rotational force into linear motion. A more detailed description thereof is omitted.

According to still another embodiment of the aerial vehicle calibration device of the present disclosure, during the calibration of the aerial vehicle 1, the coil lifting/lowering portion 70, the first side lifting/lowering portion 16b, and the second side lifting/lowering portion 17b adjust the height of the second coil portion for Z-axis calibration 12, as well as the heights of the first and second coil portions for XY-axis calibration 13 and 14, to values optimized for the calibration process depending on the type of the aerial vehicle 1. This enables a significant improvement in the efficiency and accuracy of the calibration operation.

In addition, according to still another embodiment of the aerial vehicle calibration device of the present disclosure, during the calibration of the aerial vehicle 1, by adjusting the distance between the aerial vehicle 1 and the first coil portion for XY-axis calibration 13, as well as the distance between the aerial vehicle 1 and the second coil portion for XY-axis calibration 14, to an optimal spacing for the calibration process by means of the coil-spacing adjustment portion 80 depending on the type of the aerial vehicle 1, the efficiency and accuracy of the calibration operation may be significantly improved.

The aerial vehicle calibration device according to the present disclosure positions the coil portions used for calibrating the navigation device of the aerial vehicle 1 to the left and right, as well as above and below the aerial vehicle, and calibrates the navigation device in a non-contact manner by adjusting the spacing between each of the coil portions.

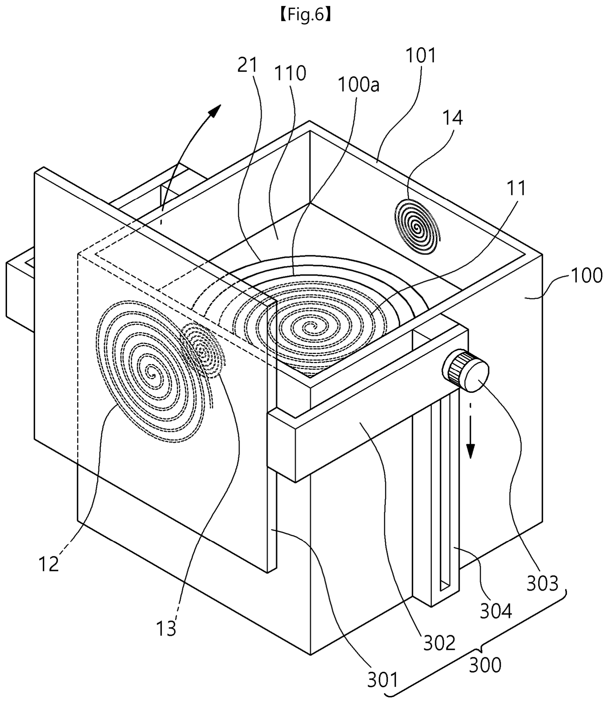

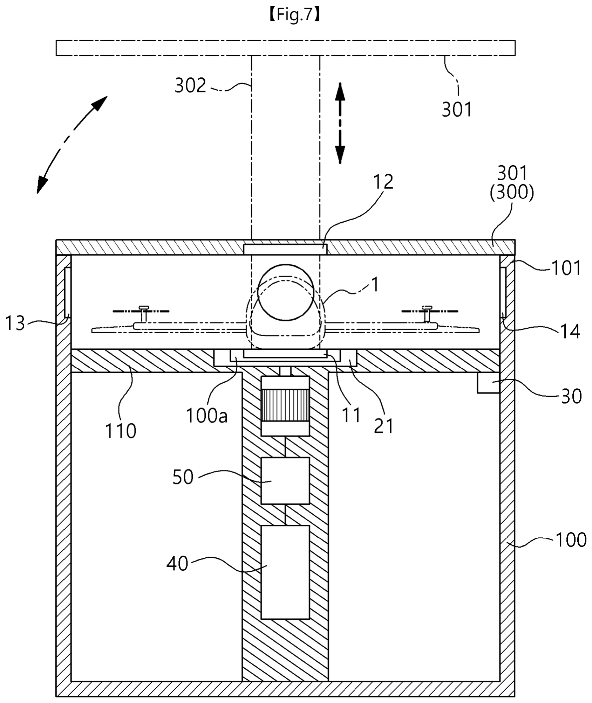

FIG. 6 is a perspective view showing an embodiment of an aerial vehicle station device according to the present disclosure, and FIG. 7 is a cross-sectional view showing an embodiment of an aerial vehicle station device according to the present disclosure.

Referring to FIGS. 6 and 7, an embodiment of an aerial vehicle station device according to the present disclosure includes: a station housing portion 100 through an open top of which an aerial vehicle 1 takes off and lands, in which a rotary table 21, rotatable in a horizontal plane, is disposed inside, and provided with a pair of sidewall portions 101, with each unit of the pair erected on each side of the rotary table 21; a station open/close portion 300 for opening and closing the open top of the station housing portion 100; a first coil portion for XY-axis calibration 13 and a second coil portion for XY-axis calibration 14 positioned to face each other on the sidewall portions 101; a first coil portion for Z-axis calibration 11 provided on the rotary table 21; a second coil portion for Z-axis calibration 12 positioned on the station open/close portion 300 so as to face the first coil portion for Z-axis calibration 11; a geomagnetic sensor 30 for measuring Earth's three-axis magnetic field; and a calibration controller 40 configured to calibrate an onboard navigation sensor in the aerial vehicle 1 using three-axis magnetic field variation values from an electronic compass in the aerial vehicle 1 and Earth's three-axis magnetic field values measured by the geomagnetic sensor 30.

The first coil portion for XY-axis calibration 13 and the second coil portion for XY-axis calibration 14 are respectively provided on the opposing sidewall portions 101 so as to face each other and generate a linear magnetic field therebetween.

As an example, the station housing portion 100 includes a takeoff/landing portion 110 whose periphery is surrounded by the sidewall portions 101, and the rotary table 21 is rotatably positioned on the takeoff/landing portion 110.

The height of the pair of sidewall portions 101 is formed higher than the height of the aerial vehicle 1 landing on the takeoff/landing portion 110, thereby providing sufficient space inside the station housing portion 100 to accommodate the aerial vehicle 1.

The takeoff/landing portion 110 is provided with a charging portion 100a for charging a battery of the aerial vehicle 1 landed thereon.

As an example, the aerial vehicle 1 capable of vertical take-off and landing is provided with a battery part for supplying electric power to a drive system thereof, and the charging portion 100a provided on the takeoff/landing portion 110 is a wireless charging portion that wirelessly supplies electric power to the battery part of the landed aerial vehicle 1.

The charging portion 100a may be variously modified and implemented by using a known charging structure that charges a battery of an aerial vehicle such as a drone at an aerial vehicle station, in addition to the wireless charging portion 100a. Thus, further detailed description is omitted.

The rotary table 21 is rotated about a rotation axis perpendicular to the ground by a table rotary motor, and thereby rotates the aerial vehicle 1 placed on the rotary table 21 in a horizontal plane between the first and second coil portions for XY-axis calibration 13 and 14.

The rotary table 21 rotates the aerial vehicle 1 in a horizontal plane so that the X-axis or Y-axis of the electronic compass may be positioned to align with the straight-line direction in which the first and second coil portions for XY-axis calibration 13 and 14 face each other.

In addition, the station open/close portion 300 includes: a housing cover member 301 that is seated on top of the station housing portion 100, covers the open top of the station housing portion 100, and on which the second coil portion for Z-axis calibration 12 is disposed; a pair of cover rotation bracket members 302, with each unit of the pair connected to each lateral end of the housing cover member 301 and positioned to overlap each side surface of the station housing portion 100; a cover rotation portion 303 for rotating the pair of cover rotation bracket members 302; and a cover lifting/lowering portion 304 for moving the housing cover member 301 up and down from the top of the station housing portion 100.

As an example, the cover rotation portion 303 moves the pair of cover rotation bracket members 302 and the cover rotation portion 303 mounted on the pair of cover rotation bracket members 302 up and down, thereby moving the housing cover member 301 up and down.

As an example, the cover lifting/lowering portion 304 is a ball-screw type linear actuator, but may also be variously implemented using known lifting structures that convert the rotational force of a motor into linear motion, such as a rack-and-pinion structure including a rack gear and a pinion gear that is rotated by a motor while meshing with the rack gear.

The housing cover member 301 may be rotated by the cover rotation portion 303 about an axis at a predetermined radius, corresponding to the length of the pair of cover rotation bracket members 302, so as to face either the side surfaces of the station housing portion 100 or the open top side of the station housing portion 100.

The housing cover member 301 may be rotated by the cover rotation portion 303 at a radius corresponding to the length of the pair of cover rotation bracket members 302, so as to be positioned at the side surface of the station housing portion 100 or spaced apart from the top surface of the station housing portion 100.

When the housing cover member 301 is positioned at the side surface of the station housing portion 100, the takeoff/landing portion 110 of the station housing portion 100 is opened, allowing the aerial vehicle 1 to land on or take off from the landing area through the open top of the station housing portion 100.

In addition, the housing cover member 301 may be lowered by the a cover lifting/lowering portion 304 to rest on the upper surface of the station housing portion 100, thereby sealing the open top of the station housing portion 100.

Calibration of the electronic compass of the aerial vehicle 1 may be performed in a state where the aerial vehicle 1 is landed on the rotary table 21 and the housing cover member 301 is seated on the top of the station housing portion 100.

An embodiment of the aerial vehicle station device according to the present disclosure may further include a coil current-applying portion 50 for supplying an electric current to the first and second coil portions for Z-axis calibration 11 and 12, as well as the first and second coil portions for XY-axis calibration 13 and 14.

The first and second coil portions for Z-axis calibration 11 and 12 receive an electric current from the coil current-applying portion 50 to generate a magnetic field in the Z-axis direction, that is, in a vertical direction between the rotary table 21 and the housing cover member 301.

The first and second coil portions for XY-axis calibration 13 and 14 receive an electric current from the coil current-applying portion 50 to generate a magnetic field in a straight-line direction between the opposing sidewall portions 101, and the rotary table 21 may rotate the aerial vehicle 1 so that the X-axis or Y-axis of the electronic compass may be positioned to align with a magnetic field in a straight line formed between the first and second coil portions for XY-axis calibration 13 and 14.

It should be noted that the calibration method for performing calibration of the electronic compass of the aerial vehicle 1 using the first and second coil portions for XY-axis calibration 13 and 14, the first and second coil portions for Z-axis calibration 11 and 12, the rotary table 21, and the calibration controller 40 is the same as the embodiment of the aerial vehicle calibration device according to the present disclosure described above.

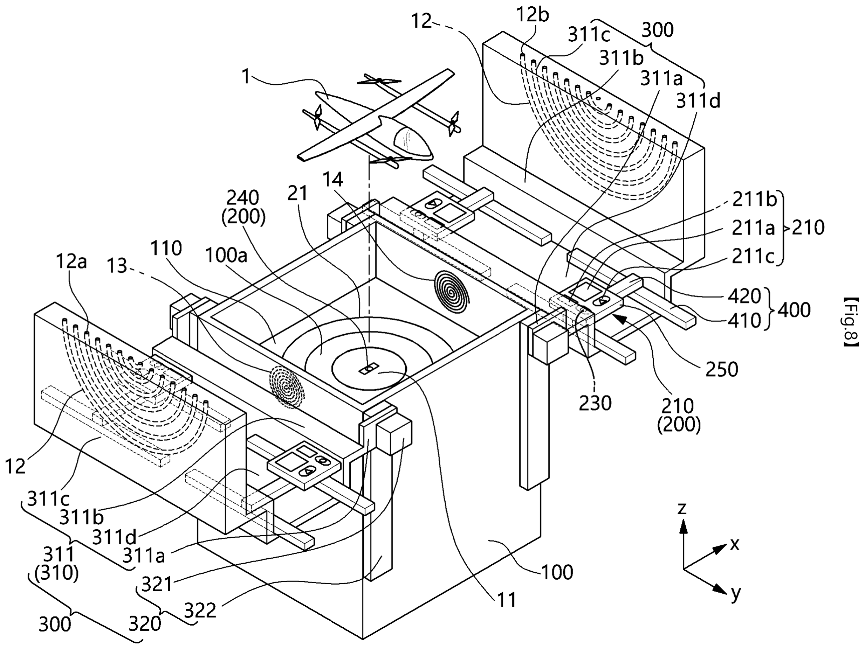

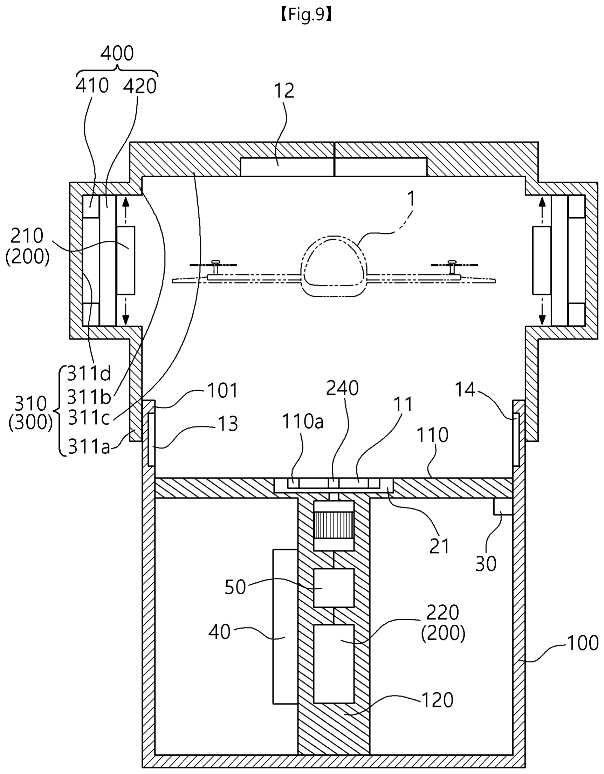

FIG. 8 is a perspective view showing another embodiment of an aerial vehicle station device according to the present disclosure, and FIG. 9 is a cross-sectional view showing another embodiment of an aerial vehicle station device according to the present disclosure. Referring to FIGS. 8 and 9, another embodiment of the aerial vehicle station device according to the present disclosure may further include an aerial vehicle inspection portion 200 provided in the station open/close portion 300 or the station housing portion 100 for checking for abnormalities in the drive system of the aerial vehicle 1.

The station open/close portion 300 may include an open/close cover portion 310 that covers an opening of the station housing portion 100; and an open/close actuator 320 hat opens and closes the opening by rotating or moving the open/close cover portion 310.

As an example, the open/close cover portion 310 is rotatably connected to the station housing portion 100, and the open/close actuator is a rotational driving device including a rotary motor that rotates the open/close cover portion 310 about a hinge.

To be specific, the open/close cover portion 310 includes a pair of cover door members 311 that is rotated to cover the opening, and the open/close actuator 320 includes a door rotation device 321 including a rotary motor for rotating the cover door member 311.

The door rotation device 321 is provided at the hinge portion of each of the cover door members 311 and rotates the cover door members 311 either toward each other or away from each other to open or close the opening.

The cover door member 311 includes: a rotation bracket 311a that is rotatably hinge-coupled to the station housing portion 100 and on which the door rotation device 321 is mounted; a side cover panel 311b positioned on the side of the station housing portion 100, overlapping at least a part of the side of the station housing portion 100, and on the lower part of which the rotation bracket 311a is mounted; and an upper cover panel 311c bent and positioned at the upper part of the side cover panel 311b to cover the top of the opening.

The rotation bracket 311a is hinge-coupled to the front and rear of the station housing portion 100 so as to be rotatable, and when the side cover panels 311b are rotated by the door rotation devices 321 so that the side cover panels 311b are erected vertically, the upper cover panels 311c come together to close, thereby forming a planar upper door.

The second coil portion for Z-axis calibration 12 is provided in parts on each of the upper cover panels 311c, and on the facing surfaces of the upper cover panels 311c, a plurality of first coil connection terminals 12a and a plurality of second coil connection terminals 12b are respectively provided to connect the divided coils.

When the upper cover panels 311c come together to close, the first coil connection terminals 12a and the second coil connection terminals 12b are connected, thereby connecting the divided coils to form a single, continuous second coil portion for Z-axis calibration 12.

In addition, the first and second coil portions for XY-axis calibration 13 and 14 are respectively provided to face each other on the sidewall portions 101, generating a straight-line magnetic field therebetween, and, as an example, the sidewall portions 101 are walls erected to surround the outer edges of the takeoff/landing portion.

The side cover panels 311b have a height that allows a stable take-off and landing space for the aerial vehicle 1 during vertical take-off and landing, thereby forming a space below the upper cover panels 311c through which the aerial vehicle 1 can fly.

The open/close actuator 320 further includes a door lifting/lowering device 322 that moves the door rotation devices 321 and the cover door member 311 up and down to adjust the height of the cover door member 311.

The door lifting/lowering device 322 is mounted on the front or rear of the station housing portion 100, and the rotation bracket 311a on which the door rotation device 321 is mounted is movably connected to the door lifting/lowering device 322 in the vertical direction. By moving the connected rotation bracket 311a up and down, the door lifting/lowering device 322 may adjust the height of the cover door member 311.

As an example, the door lifting/lowering device 322 is a ball-screw type linear actuator, but may also be variously implemented using known lifting structures that convert the rotational force of a motor into linear motion, such as a rack-and-pinion structure including a rack gear and a pinion gear that is rotated by a motor while meshing with the rack gear.

To be specific, the takeoff/landing portion 110 is positioned, in a recessed form, on the open upper side of the station housing portion 100, and the upper cover panels 311c of the cover door members 311, which come together to form a planar upper door, rest on the top of the station housing portion 100 to completely close the opening.

With the rotation brackets 311a positioned on the upper side of the station housing portion 100, the cover door members 311 are each rotated to come together and close, and then lowered by the respective door lifting/lowering devices 322 so that the upper cover panels 311c may rest on the top of the station housing portion 100.

The side cover panel 311b is supported on the side surface of the station housing portion 100 when the cover door member 311 moves up and down by the door lifting/lowering device 322, thereby guiding he vertical movement of the cover door member 311.

The cover door members 311 may cover the space above the aerial vehicle 1 flying at a low altitude relative to the landing area with the upper cover panels 311c when the aerial vehicle 1 capable of vertical take-off and landing descends to land on the takeoff/landing portion 110 or takes off from the takeoff/landing portion 110.

Accordingly, the cover door members 311, with the upper cover panels 311c and the side cover panels 311b, protect the aerial vehicle 1 during take-off and landing from the external environment, allowing the aerial vehicle 1 to stably take off from and land on the takeoff/landing portion 110.

During inspection of the drive system, the aerial vehicle 1 hovers in a stationary state above the takeoff/landing portion 110 for a predetermined time. At this time, with the rotation brackets 311a positioned on the upper side of the station housing portion 100, the cover door members 311 are rotated so that the upper cover panels 311c come together, covering the top and sides of the aerial vehicle 1 with the upper cover panels 311c and the side cover panels 311b.

In addition, when the aerial vehicle 1 lands on the station housing portion 100, the cover door members 311 are lowered by the door lifting/lowering devices 322 so that the upper cover panels 311c rest on the top of the station housing portion 100, completely closing the opening.

When the aerial vehicle 1 completes charging of the battery thereof at the charging portion 100a and takes off from the takeoff/landing portion 110, the cover door members 311 are raised by the door lifting/lowering devices 322 while the upper cover panels 311c remain seated on the top of the station housing portion 100, thereby creating a clearance space beneath the upper cover panels 311c through which the aerial vehicle 1 can take off.

Once the clearance space is created above the takeoff/landing portion 110 by the lifting of the cover door members 311, the aerial vehicle 1 takes off, and after the aerial vehicle 1 takes off, the cover door members 311 are rotated by the door rotation devices 321 to open outward, thereby completely opening the opening of the station housing portion 100 and allowing the aerial vehicle 1 to fly out of the station housing portion 100.

Meanwhile, the aerial vehicle inspection portion 200 includes: an inspection sensor 210 provided in the station open/close portion 300 for detecting abnormalities in the drive system of the aerial vehicle 1; and an abnormality-determination controller 220 that receives information detected by the inspection sensor 210 and determines whether there is an abnormality in the drive system.

As an example, the abnormality-determination controller 220 receives information detected by the inspection sensor 210 via wireless or wired communication.

As an example, the abnormality-determination controller 220 is located within the station housing portion 100 to notify an administrator of inspection results via wired or wireless communication, or is located in a control center that controls the operation or management of the aerial vehicle 1.

As an example, the inspection sensor 210 includes a drive portion inspection sensor 211 that measures a physical state during operation of the drive system to detect aging or failure of the drive system of the aerial vehicle 1.

The inspection sensor 210 may be mounted on the upper cover panel 311c or the side cover panel 311b and may inspect the drive system of the aerial vehicle 1 while the aerial vehicle 1 is hovering in a stationary state within the clearance space created beneath the upper cover panels 311c.

As an example, the inspection sensor 210 may be mounted on the side cover panel 311b, and when the side cover panel 311b is erected, a sensor mounting surface 311d is positioned to face the drive system of the aerial vehicle 1 flying within the clearance space.

As an example, the inspection sensor 210 includes a drive portion inspection sensor 211 that measures a physical state during operation of the drive system to detect aging or failure of the drive system of the aerial vehicle 1.

As an example, the drive portion inspection sensor 211 measures physical quantities of vibration of the drive system, measures a magnetic field generated by the drive system, or measures noise generated by the drive system, that is, acoustic wave vibrations.

As an example, the drive portion inspection sensor 211 is positioned on the upper surface of the takeoff/landing portion 110 so as to correspond to the drive system of the aerial vehicle 1 and is located within a sensor housing portion 250.

The sensor housing portion 250 is made of a material such as aluminum or a transparent synthetic resin, such as acrylic, that allows magnetic fields, sound waves, and vibrations detected by the drive portion inspection sensor 211 to pass through and be sensed.

In the case of unmanned or manned aircraft such as drones capable of vertical take-off and landing, since a plurality of drive systems are provided, a plurality of inspection sensors 210 is provided, as an example, corresponding to the plurality of drive systems.

The drive system includes a propeller, an electric motor that rotates the propeller, and an electronic speed controller (ESC) that controls the speed of the electric motor. The drive portion inspection sensor 211 includes a magnetic field detector 211a that detects a magnetic field generated by the drive system.

The magnetic field detector 211a detects magnetic fields generated by the drive system, that is, the electric motor and the ESC that controls the speed of the electric motor.

The ESC is provided in the aerial vehicle 1, such as a drone, to control the speed of the electric motor, and a more detailed description thereof is omitted.

When operating, the electric motor creates a permanent magnetic field and an induced magnetic field in the vicinity thereof, and the ESC, that is, the electronic speed controller, generates motor control signals for controlling the speed of the electric motor.

The magnetic field detector 211a detects the magnetic fields created by the electric motor, that is, the permanent and induced magnetic fields created during motor operation, and detects a magnetic field generated by the motor control signals from the ESC, that is, the electronic speed controller, and transmits the information to the abnormality-determination controller 220.

The magnetic field detector 211a is positioned exposed and facing the drive system at the takeoff/landing portion 110 and detects the permanent and induced magnetic fields generated during operation of the electric motor, as well as the motor control signals from the ESC.

The magnetic field detector 211a is positioned exposed and facing the aerial vehicle 1 to detect the permanent and induced magnetic fields generated during motor operation, as well as the motor control signals from the ESC.

In addition, as an example, the drive portion inspection sensor 211 includes a drive portion vibration detector 211b that senses vibration physical quantities (vibrational parameters) of the drive system.

As an example, the drive portion vibration detector 211b is a radar sensor that measures vibration physical quantities of the drive system, that is, the vibration of the propeller and the electric motor, using electromagnetic waves.

The radar sensor emits electromagnetic waves toward the propeller of the drive system to measure the vibration physical quantities of the propeller.

The takeoff/landing portion 110 is provided with the sensor housing portion 250 in which a physical operation detector is mounted. The sensor housing portion 250 is provided with an electromagnetic wave emission opening (not shown) through which electromagnetic waves emitted from a radar sensor installed inside pass, the opening being covered with an electromagnetic wave-transmissive cover member made of a material through which the waves can pass.

The radar sensor is positioned inside the sensor housing portion 250 and is protected from external environments such as moisture.

The electromagnetic wave emission opening (not shown) is positioned such that the center of the emitted electromagnetic waves, that is, the axis of the directional beam, is directed toward the motor, allowing accurate measurement of vibrations generated by the electric motor and the propeller.

The radar sensor may direct the center of the electromagnetic wave, that is, the center of the directional beam, toward the motor, and may simultaneously measure the physical quantities caused by the propeller around the motor using the beamwidth.

That is, the radar sensor may detect and measure the vibration physical quantities of the electric motor and the vibration physical quantities of the propeller during the flight of the aerial vehicle 1, and transmit the information to the abnormality-determination controller 220.

In addition, the drive portion inspection sensor 211 includes an acoustic detector 211c capable of measuring sound waves, that is, noise, generated by the drive system.

The acoustic detector 211c is, as an example, a microphone capable of receiving sound waves and converting the received sound waves into voice current. The acoustic detector 211c includes a plurality of microphones that receive sounds, that is, sound waves generated by the drive system, convert the sound waves into electrical signals, that is, voice currents, and transmit the voice currents to the abnormality-determination controller 220.

The sensor housing portion 250 is formed with sound wave measurement holes in which the microphones are mounted. The sound wave measurement holes are circular, and as an example, a plurality of the holes is arranged in a circular pattern or in a straight line.

It should be noted that the size of the sound wave measurement holes may be designed in consideration of the characteristics of sound waves generated by the propeller and a preset distance between the aerial vehicle 1 and the microphones when detecting sound waves during takeoff and landing of the aerial vehicle 1.

In addition, the drive portion inspection sensor 211 includes an acoustic detector 211c capable of measuring sound waves, that is, noise, generated by the drive system.

The acoustic detector 211c is, as an example, a microphone capable of receiving sound waves and converting the received sound waves into voice current. The acoustic detector 211c includes a plurality of microphones that receive sounds, that is, sound waves generated by the drive system, convert the sound waves into electrical signals, that is, voice currents, and transmit the voice currents to the abnormality-determination controller 220.

The sensor housing portion 250 is formed with sound wave measurement holes in which the microphones are mounted. The sound wave measurement holes are circular, and as an example, a plurality of the holes is arranged in a circular pattern or in a straight line.

It should be noted that the size of the sound wave measurement holes may be designed in consideration of the characteristics of sound waves generated by the propeller and a preset distance between the aerial vehicle 1 and the microphones when detecting sound waves during takeoff and landing of the aerial vehicle 1.

The drive portion inspection sensor 211 transmits detected physical information to the abnormality-determination controller 220 through wireless or wired communication.

The abnormality-determination controller 220 receives information detected by the drive portion inspection sensor 211, that is, magnetic field measurement values sensed by the magnetic field detector 211a, vibration measurement values sensed by the drive portion vibration detector 211b, and sound wave signals sensed by the acoustic detector 211c, and determines whether the drive system of the aerial vehicle 1 is aged or faulty.

To be specific, the drive portion inspection sensor 211 may include at least one of the magnetic field detector 211a, the drive portion vibration detector 211b, and the acoustic detector 211c, or may include all of the magnetic field detector 211a, the drive portion vibration detector 211b, and the acoustic detector 211c.

The drive portion vibration detector 211b, that is, the radar sensor, may transmit RF signals having a specific waveform pattern to the electric motor and the propeller, may receive the form of signals reflected back after striking an object, and may transmit the form of the reflected signals to the abnormality-determination controller 220.

The abnormality-determination controller 220 may perform FFT analysis on the received signals to extract frequency components related to rotation, may derive the waveform patterns, and thereby may detect abnormal conditions.

As an example, the abnormality-determination controller 220 may determine that the electric motor or the propeller is in a normal condition when the pattern of the signal received from the radar sensor exhibits a relatively smooth, repeating waveform.

The abnormality-determination controller 220 may determine that an abnormality has occurred in the operation of the electric motor or the propeller when the vibration values received from the radar sensor exceed a preset vibration threshold.

In case that a propeller blade is broken and rotates unevenly, causing vibration values to exceed the preset threshold, the received signal pattern contains intermittent noise and exhibits irregular patterns of varying magnitudes.

When the signal pattern received from the radar sensor unit contains intermittent noise and exhibits irregular patterns of varying magnitudes, the abnormality-determination controller 220 determines that an abnormality has occurred in the operation of the electric motor or the propeller.

The abnormality-determination controller 220 is preset with normal and aged condition vibration ranges for the electric motor and the propeller, and a plurality of signal patterns corresponding to normal, aged, and faulty conditions are stored for the signal patterns received from the radar sensor. The signal patterns corresponding to aged condition are stored separately according to different aging states.

The abnormality-determination controller 220 determines normal operation when the vibration values received from the radar sensor fall within the normal vibration range, and determines a fault when the vibration values received from the radar sensor fall outside the normal vibration range.

In addition, the abnormality-determination controller 220 determines the aging state by comparing the received vibration values, when the values fall within the aged vibration range, with prestored aged signal patterns corresponding to different aging states. In case that the received signal pattern does not correspond to either the aged signal pattern or the normal signal pattern, the abnormality-determination controller 220 determines that a fault has occurred in the drive system, including the electric motor or the propeller.

In addition, the abnormality-determination controller 220 may determine the aging state or the presence of a fault in the drive system based on the signal patterns of the magnetic field detected and received from the magnetic field detector 211a.

When the electric motor operates normally, the motor generates ideal rotational torque, that is, the torque is produced in a regular manner. Accordingly, the magnetic field signal pattern of the electric motor detected by the magnetic field detector 211a is symmetric and continuous in a regular, periodic pattern.

In contrast, in case that a winding of the electric motor is broken or a shaft is tilted, the magnetic field signal detected by the magnetic field detector 211a becomes asymmetric and irregular, and exhibits intermittent and varying noise patterns.

Thus, when the magnetic field signal detected by the magnetic field detector 211a is symmetric and continuous in a regular pattern, the abnormality-determination controller 220 determines that the drive system is operating normally.

In addition, when the magnetic field signal detected by the magnetic field detector 211a becomes asymmetric and irregular, and exhibits intermittent and varying noise patterns, the abnormality-determination controller 220 determines that the electric motor has deteriorated due to aging or that a failure has occurred.

That is, the abnormality-determination controller 220 prestores a first motor magnetic field signal pattern range for identifying a normal state of the electric motor, prestores a second motor magnetic field signal pattern range for identifying aging states of the electric motor according to respective aging conditions, and prestores a third motor magnetic field signal pattern range for identifying a failure of the electric motor.

The abnormality-determination controller 220 may compare the magnetic field signal pattern of the electric motor detected by the magnetic field detector 211a with the prestored first motor magnetic field signal pattern range, second motor magnetic field signal pattern range, and third motor magnetic field signal pattern range, thereby determining an aging state and whether a failure of the electric motor has occurred.

In addition, in a normal condition, an ESC motor control signal detected by the magnetic field detector 211a has a pulse width and amplitude of a PWM (pulse width modulation) waveform for motor control that are within a preset range, whereas when a failure occurs, the PWM waveform for motor control deviates from the preset range.

The abnormality-determination controller 220 may determine that the ESC is operating normally when the PWM of the motor control signal detected by the magnetic field detector 211a has a waveform width and amplitude within a preset range, and determine that the ESC has failed when the PWM of the motor control signal has a waveform width and amplitude that fall outside a preset range.

That is, the abnormality-determination controller 220 prestores a first controller magnetic field signal pattern range for identifying a normal state of the ESC, prestores a second controller magnetic field signal pattern range for identifying aging states of the ESC according to respective aging conditions, and prestores a third controller magnetic field signal pattern range for identifying a failure of the ESC.

The abnormality-determination controller 220 may compare the magnetic field signal pattern of the ESC detected by the magnetic field detector 211a with the prestored first, second, and third controller magnetic field signal pattern ranges, thereby determining the aging state and whether a failure of the ESC has occurred.

In addition, the abnormality-determination controller 220 may assess the degree of component aging and detect abnormalities based on the acoustic signals detected by the acoustic detector 211c.

The acoustic detector 211c detects sounds, that is, noises, generated by the aerodynamic phenomena caused by a propeller's rotation and by bearing wear of the electric motor, and transmits the information to the abnormality-determination controller 220.

When the propeller rotates under normal conditions, aerodynamic forces generated by the propeller produce a steady tonal noise. Conversely, when the propeller is unbalanced or bearing aging causes vibrations, additional aerodynamic noise is generated, which is superimposed on and obscured within the received acoustic signal.

When the bearings of the electric motor are worn, high-frequency noise is generated. The acoustic detector 211c detects and transmits this high-frequency noise, along with the acoustic signal, to the abnormality-determination controller 220. The controller 220 then determines the presence of abnormalities or the degree of aging of the electric motor or the propeller based on the waveform pattern and high-frequency components of the received acoustic signal.

That is, the abnormality-determination controller 220 prestores a first acoustic signal pattern range for identifying a normal state of the drive system, prestores a second acoustic signal pattern range for identifying aging states of the drive system according to respective aging conditions, and prestores a third acoustic signal pattern range for identifying a failure of the drive system.

The abnormality-determination controller 220 may compare the acoustic signal pattern detected by the acoustic detector 211c with the prestored first, second, and third acoustic signal pattern ranges, thereby determining the aging state and whether a failure of the ESC has occurred.

The abnormality-determination controller 220 stores reference values and signal patterns for vibration, magnetic field, and acoustic signals corresponding to the normal operating states and varying degrees of aging of the electric motor, propeller, and ESC, which have been obtained through multiple experiments.

The abnormality-determination controller 220 may determine, in real time, the failure status and aging condition of the drive system by comparing the measurements or signal patterns detected in real time by the drive portion vibration detector 211b, the magnetic field detector 211a, and the acoustic detector 211c with the prestored reference values and signal patterns.

In addition, the inspection sensor 210 further includes a thermal imaging camera portion 230 for capturing an aerial vehicle and verifying the heat distribution within the interior of the aerial vehicle 1 or the drive system thereof.

The thermal imaging camera portion 230 is a known type of camera that visualizes the infrared (thermal) radiation emitted by an object to form an image, capturing the infrared radiation emitted by an object, converting the captured infrared radiation into an image, and displaying the image on a screen, and a detailed description thereof is omitted herein.

The thermal imaging camera portion 230 may verify the heat distribution within the interior of the aerial vehicle 1 after completing flight and landing thereof, or may verify the distribution of heat generated by the electric motor during the operation thereof.

The abnormality-determination controller 220 prestores images of the normal internal heat distribution corresponding to the type of the aerial vehicle 1, and compares the heat distribution images captured by the thermal imaging camera portion 230 with the prestored internal heat distribution images to determine any damage or aging condition of the interior of the aerial vehicle 1 or the electric motor.

In addition, the aerial vehicle inspection portion 200 further includes a type-identification camera portion 240 positioned at the takeoff/landing portion 110 for capturing the aerial vehicle 1 to verify the type of the aerial vehicle 1 or to determine the position or orientation thereof.

The type-identification camera portion 240 verifies not only the type of the aerial vehicle 1 to be inspected, but also whether the aerial vehicle 1 is at the inspection position on the takeoff and landing site and the orientation thereof.

The type-identification camera portion 240 identifies the type of the aerial vehicle 1 to be inspected, verifies the location and number of drive systems according to the vehicle type, and verifies the vehicle size. By utilizing the information on the drive systems and the vehicle size corresponding to the type, a more accurate inspection of the aerial vehicle 1 is enabled.

Since the inspection reference values for the aerial vehicle vary depending on the type, the type-identification camera portion verifies the type of the aerial vehicle, and inspections of the drive system and exterior of the aerial vehicle may be performed based on the corresponding reference values.

The aerial vehicle inspection portion 200 verifies, using the type-identification camera portion 240, that the aerial vehicle 1 is positioned on the takeoff/landing portion 110 immediately after takeoff or just before landing, and ensures that the inspection sensor 210 is aligned with the drive system of the aerial vehicle 1. While this alignment is maintained, the inspection sensor 210 may check for any abnormalities in the drive system.

Meanwhile, as an example, the inspection sensor 210 is mounted on the inner surface of the side cover panel 311b so as to be positioned to enable inspection of the door rotation device 321 and the door lifting/lowering device 322, which constitute the open/close actuator 320 mounted on the front or rear of the station housing portion 100.

The cover door members 311 are rotated by the respective door rotation devices 321 and unfolded so that the inner surfaces of the side cover panels 311b lie in a plane parallel to the takeoff/landing portion 110, thereby opening the opening of the station housing portion 100.

In addition, the cover door members 311 are raised by the door lifting/lowering device so that the ends of the upper cover panels 311c meet, creating a clearance space beneath the upper cover panels 311c that allows the aerial vehicle 1 to perform stationary flight. Alternatively, the cover door members 311 are lowered by the door lifting/lowering device to rest on the upper surface of the station housing portion 100, thereby closing the opening.

When the ends of the upper cover panels 311c meet to create a clearance space beneath the upper cover panels 311c, the side cover panels 311b are positioned vertically, so that the sensor mounting surface 311d of the inspection sensor 210 face the drive system of the aerial vehicle 1 flying within the clearance space.

The inspection sensor 210 is mounted on the side cover panel 311b and is provided in a number corresponding to the drive systems of the aerial vehicle 1 to be inspected. In the case of the aerial vehicle 1 capable of vertical takeoff and landing, which typically has four drive systems, four sensors are provided correspondingly as an example.

An embodiment of the aerial vehicle station device according to the present disclosure further includes a sensor moving portion 400 for moving the inspection sensor 210.

The sensor moving portion 4 may determine the position of the drive system based on the position of the aerial vehicle 1 identified by the type-identification camera portion 240 or the signal magnitude detected by the drive portion inspection sensor 211, and may move the inspection sensor 210 to a position facing the drive system. This allows the inspection sensor 210 to effectively detect the magnetic field, acoustic signals, and vibrations generated by the drive system, thereby improving the accuracy of the inspection of the drive system of the aerial vehicle 1.

On the inner surface of the side cover panel 311b, the sensor mounting surface 311d is recessed to accommodate the sensor moving portion 400 and the inspection sensor 210. A sensor mounting surface of the inspection sensor 210 mounted on the sensor moving portion 400 is positioned either flush with the inner surface of the side cover panel 311b or lower than the inner surface of the side cover panel 311b.

The inner surface of the side cover panel 311b is supported by the side of the station housing portion 100 when the side cover panel 311b is lowered by the door lifting/lowering device 322 while standing vertically, thereby guiding the raising and lowering of the cover door member 311. At this time, the sensor moving portion 400 and the inspection sensor 210 are mounted on the recessed sensor mounting surface 311d so as not to protrude above the inner surface. Consequently, when the side cover panel 311b is lowered by the door lifting/lowering device 322 while standing vertically, the inner surface of the side cover panel 311b, except for the sensor mounting surface 311d, is supported by the side of the station housing portion 100, thereby guiding the raising and lowering of the cover door member 311.

The sensor moving portion 400 includes: a first sensor moving device 410 for moving the inspection sensor 210 in the Y-axis direction in a horizontal plane parallel to the ground; and a second sensor moving device 420 for moving the inspection sensor 210 in the X-axis direction in a horizontal plane parallel to the ground.

As an example, the second sensor moving device 420 moves the first sensor moving device 410 in the X-axis direction, thereby enabling the sensor housing portion 250 to be moved in both the Y-axis and X-axis directions.

Although not shown, it should be noted that the first sensor moving device 410 may move the second sensor moving device 420 in the Y-axis direction, thereby enabling the inspection sensor 210 to be moved in both the X-axis and Y-axis directions.

The sensor moving portion 400 moves the inspection sensor 210 in the Y-axis and X-axis directions when the side cover panels 311b are unfolded so that the inner surfaces thereof lie in a plane parallel to the takeoff/landing portion 110. When the side cover panels 311b are upright, with the inner surfaces thereof positioned vertically parallel to the sides of the sensor housing portion, the sensor moving portion 400 moves the inspection sensor 210 in the Y-axis and Z-axis directions.

That is, the first sensor moving device 410 moves the inspection sensor 210 in the Y-axis direction when the side cover panels 311b are either unfolded so that the inner surfaces thereof lie in a plane parallel to the takeoff/landing portion 110 or stand upright with the inner surfaces thereof positioned vertically.

In addition, the second sensor moving device 420 moves the inspection sensor 210 in the X-axis direction when the side cover panels 311b are unfolded so that the inner surfaces thereof lie in a plane parallel to the takeoff/landing portion 110, and moves the inspection sensor 210 in the Z-axis direction when the side cover panels 311b stand upright with the inner surfaces thereof positioned vertically.

The inspection of the drive system of the aerial vehicle 1 is carried out while the aerial vehicle 1 hovers just before landing on or immediately after taking off from the takeoff/landing portion 110, from above the takeoff/landing portion 110. At this time, as the cover door members 311 are raised by the respective door lifting/lowering devices and then folded by the door rotation devices 321, the side cover panels 311b remain standing, and the ends of the upper cover panels 311c meet, thereby forming a clearance space beneath the upper cover panels 311c that allows the aerial vehicle 1 to hover.

When the side cover panels 311b are upright and form a clearance space beneath the upper cover panels 311c that allows the aerial vehicle 1 to hover, the sensor mounting surface 311d of the inspection sensor 210 is positioned upright to face the drive system of the hovering aerial vehicle 1, thereby enabling inspection of the drive system.

During the inspection of the drive system, the inspection sensor 210 is moved in the Y-axis or Z-axis direction by the first sensor moving device 410 and the second sensor moving device 420 to align with the position of the hovering aerial vehicle 1 or the position of the drive system according to the type of the aerial vehicle 1.

As an example, the first sensor moving device 410 and the second sensor moving device 420 are ball-screw type linear actuators, but may also be variously implemented using known linear motion structures that convert the rotational force of a motor into linear motion, such as a rack-and-pinion structure including a rack gear and a pinion gear that is rotated by a motor while meshing with the rack gear.

The inspection sensor 210 moves along the first sensor moving device 410 and the second sensor moving device 420, and may check for any faults or aging conditions of the motors of the first sensor moving device 410 and the second sensor moving device 420.

That is, the inspection sensor 210 may detect vibrations, magnetic fields, or acoustic signals generated by the motors of the first sensor moving device 410 and the second sensor moving device 420 by means of the drive portion vibration detector 211b, the magnetic field detector 211a, and the acoustic detector 211c. The abnormality-determination controller 220 may compare the detected measurements or signal patterns with prestored reference values and signal patterns, thereby individually determining the fault status and aging condition of the motors of the first sensor moving device 410 and the second sensor moving device 420.

In addition, the sensor mounting surface 311d is positioned so that opposite sides thereof in the width direction (i.e., the Y-axis direction) of the side cover panel 311b are open, and the first sensor moving device 410 may position the inspection sensor 210 so that at least a part of the inspection sensor 210 extends beyond opposite sides of the side cover panel 311b.

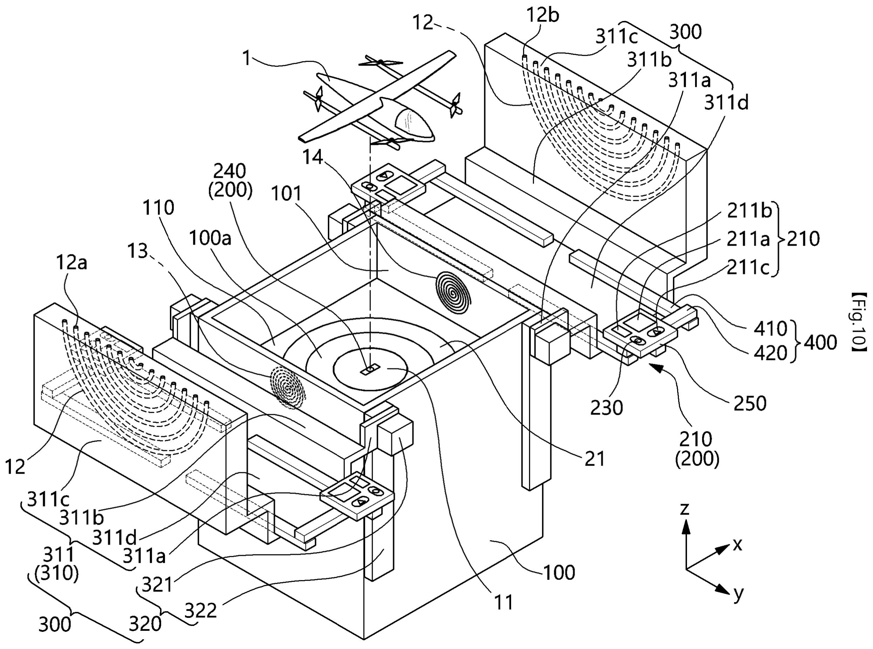

FIG. 10 is a perspective view showing an example of inspecting the open/close actuator with the aerial vehicle inspection portion 200 in another embodiment of the aerial vehicle station device according to the present disclosure. Referring to FIG. 10, the inspection sensor 210 may be positioned by the first sensor moving device 410 so as to partially protrude beyond opposite sides of the side cover panel 311b, thereby enabling inspection of the motor of the door rotation device 321 located at the front or rear of the station housing portion 100.

The door rotation device 321 is positioned at an upper side of the station housing portion 100 on the front or rear of the station housing portion 100, and rotates the cover door member 311 disposed on each side surface of the station housing portion 100.

Accordingly, when the cover door members 311 are rotated by the respective door rotation devices 321 to be unfolded or folded, the inspection sensor 210 is positioned to partially protrude beyond opposite sides of the side cover panel 311b and extend toward the front of the station housing portion 100, thereby allowing vibrations, magnetic fields, or acoustic waves generated from the motor of the door rotation device 321 located at the front or rear of the station housing portion 100 to be efficiently detected by the drive portion vibration detector 211b, the magnetic field detector 211a, and the acoustic detector 211c.

In addition, the abnormality-determination controller 220 may determine whether a failure has occurred and the aging state of the motor of the door rotation device 321 by comparing the measured values or signal patterns detected by the inspection sensor 210 with prestored reference values and signal patterns.

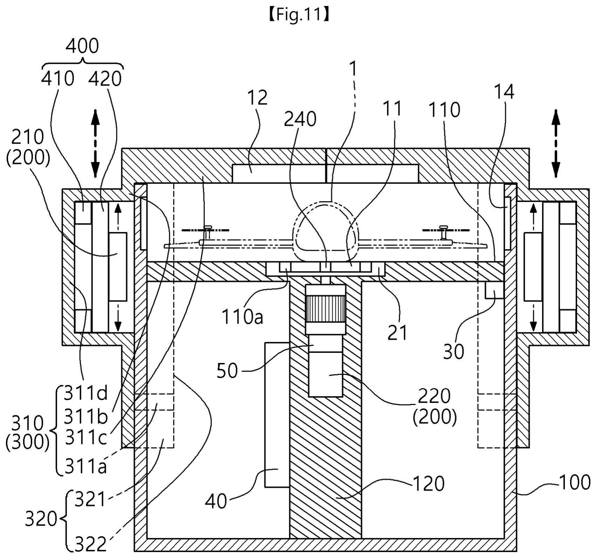

In addition, FIG. 11 is a cross-sectional view showing an example in which the station housing portion is closed by the station open/close portion 300 in another embodiment of an aerial vehicle station device according to the present disclosure.

Referring to FIG. 11, with the side cover panels 311b in an upright state, that is, with the cover door members 311 closed and the upper cover panels 311c in contact with each other, the cover door member 311 may be moved up and down by the door lifting/lowering device 322, thereby enabling inspection of the motor of the door lifting/lowering device 322 located at the front of the station housing portion 100.

When the cover door members 311 are moved up and down by the door lifting/lowering device 322 in a closed state, the inspection sensor 210 mounted on the side cover panel 311b detects vibrations, magnetic fields, or acoustic waves generated from the motor of the door lifting/lowering device 322 by means of the drive portion vibration detector 211b, the magnetic field detector 211a, and the acoustic detector 211c.

At this time, with a part of the inspection sensor 210 protruding beyond opposite sides of the cover panel toward the front of the station housing portion 100, the inspection sensor 210 moves up and down, thereby efficiently detecting vibrations, magnetic fields, or acoustic waves generated from the motor of the door lifting/lowering device 322 located at the front or rear of the station housing portion 100 by means of the drive portion vibration detector 211b, the magnetic field detector 211a, and the acoustic detector 211c.

In addition, the abnormality-determination controller 220 may determine whether a failure has occurred and the aging state of the motor of the door lifting/lowering device 322 by comparing the measured values or signal patterns detected by the inspection sensor 210 with prestored reference values and signal patterns.

The aerial vehicle station device according to the present disclosure is able to simultaneously perform calibration of the electronic compass of the aerial vehicle 1, charging of the aerial vehicle 1, and inspection of the drive system of the aerial vehicle 1, thereby significantly reducing the time and cost required for inspection, greatly enhancing the inspection efficiency of the aerial vehicle 1, and substantially reducing accidents that may occur during flight.

According to the aerial vehicle station device of the present disclosure, the inspection portion for checking the drive system of the aerial vehicle 1 may also perform inspection of the open/close drive portion of the station open/close portion 300, thereby preventing station malfunctions, reducing the cost and time required for inspecting station equipment, and enabling long-term stable maintenance of the station.

In addition, referring to FIG. 11, with the upper cover panels 311c in contact with each other, the cover door members 311 may be lowered by the door lifting/lowering devices 322 so that the upper cover panels 311c rest on the top surface of the station housing portion 100, enabling calibration of the electronic compass of the aerial vehicle 1 landed on the rotary table 21 inside the station housing portion.

When the upper cover panels 311c come into contact with each other, the plurality of first coil connection terminals 12a and the plurality of second coil connection terminals 12b are connected to each other, thereby forming the second coil portion for XY-axis calibration 14.

With the upper cover panels 311c in contact and resting on the top surface of the station housing portion 100, an electric current is applied by the coil current-applying portion 50 to the first and second coil portions for XY-axis calibration 13 and 14, located on opposite sides of the aerial vehicle 1 and to the first and second coil portions for Z-axis calibration 11 and 12, located below and above the aerial vehicle 1, while the aerial vehicle 1 is rotated on the rotary table 21, thereby enabling calibration of the electronic compass of the aerial vehicle 1.

It should be noted that the calibration method for performing calibration of the electronic compass of the aerial vehicle 1 using the first and second coil portions for XY-axis calibration 13 and 14, the first and second coil portions for Z-axis calibration 11 and 12, the rotary table 21, and the calibration controller 40 is the same as the embodiment of the aerial vehicle calibration device according to the present disclosure described above.

The present disclosure enables automatic calibration of an electronic compass of an aerial vehicle, thereby improving the accuracy of the aerial vehicle's calibration and significantly reducing the cost and time required for the calibration process.

The present disclosure is not limited to the above-described embodiments and may be variously modified and implemented within the scope of the gist of the present disclosure, which is understood to be included within the scope of the present disclosure.

## Claims

1. An aerial vehicle calibration device, comprising:
an aerial vehicle rotation portion on which an aerial vehicle is seated and configured to rotate the aerial vehicle to change an axial direction of an onboard electronic compass in the aerial vehicle;
a first coil portion for Z-axis calibration and a second coil portion for Z-axis calibration disposed to face each other below and above the aerial vehicle seated on the aerial vehicle rotation portion;
a first coil portion for XY-axis calibration and a second coil portion for XY-axis calibration disposed to face each other on opposite sides of the aerial vehicle seated on the aerial vehicle rotation portion;
a geomagnetic sensor configured to measure an Earth's three-axis magnetic field; and
a calibration controller configured to calibrate an onboard navigation sensor in the aerial vehicle by comparing three-axis magnetic field variation values from the electronic compass with Earth's three-axis magnetic field values measured by the geomagnetic sensor.

2. The device of claim 1, wherein the aerial vehicle rotation portion comprises:
a rotary table configured to rotate the seated aerial vehicle in a horizontal plane and on which the first coil portion for XY-axis calibration is placed,
wherein an upper support having the second coil portion for Z-axis calibration is disposed over the rotary table.

3. The device of claim 2, further comprising:
a first side support and a second side support positioned on opposite sides of the rotary table and configured to have the first coil portion for XY-axis calibration and the second coil portion for XY-axis calibration, respectively,
wherein the upper support is supported at a predetermined height, with opposite ends thereof connected to upper ends of the first and second side supports.

4. The device of claim 1, wherein by means of the aerial vehicle rotation portion, an X-axis of the electronic compass is aligned with an axial direction of a magnetic field formed between the first and second coil portions for XY-axis calibration before an X-axis magnetic field variation value of the electronic compass induced by the magnetic field is transmitted to the calibration controller, and after rotating the aerial vehicle by 90 degrees by means of the aerial vehicle rotation portion to align a Y-axis of the electronic compass with the axial direction of the magnetic field formed between the first and second coil portions for XY-axis calibration, a Y-axis magnetic field variation value of the electronic compass induced by the magnetic field is transmitted to the calibration controller.

5. The device of claim 4, wherein the calibration controller calculates calibration values based on Z-axis, X-axis, and Y-axis magnetic field variation amounts, calculates a relative difference for each axis using the calibration values and Earth's X-axis, Y-axis, and Z-axis magnetic field values, measured by the geomagnetic sensor, and transmits the calibration values and relative difference values to an onboard navigation device of the aerial vehicle, and then the navigation device calibrates the navigation sensor using the received calibration values and relative difference values.

6. The device of claim 3, wherein the first and second side supports are rotatably disposed on opposite sides of a base seating portion, on which the rotary table is rotatably mounted, via hinge shafts, and
a support rotation portion configured to rotate the first and second side supports about the hinge shafts to open a space above the rotary table or to cover the space above the rotary table with the upper support is further included.

7. The device of claim 3, further comprising:
a base seating portion on which the rotary table is rotatably mounted and which is movable by a traveling portion.

8. The device of claim 3, further comprising:
a coil lifting/lowering portion provided on at least one of the first and second side supports and configured to raise and lower the upper support having the second coil portion for Z-axis calibration; and
a coil-spacing adjustment portion configured to move at least one of the first and second side supports to widen of narrow a spacing between the first and second side supports,
wherein the upper support comprises:
a central coil support member on which the second coil portion for Z-axis calibration is positioned; and
a first movement support member and a second movement support member partially inserted so as to be retractable on opposite sides of the central coil support member and respectively connected to the first side support and the second side support.

9. The device of claim 8, wherein the aerial vehicle rotation portion comprises:
the rotary table on which the aerial vehicle is seated and rotated;
a table support including a rotary motor for rotating the rotary table; and
a support moving portion for moving the table support forward and backward.

10. The device of claim 8, wherein a base support portion on which the aerial vehicle rotation portion is disposed is further included,
wherein the coil-spacing adjustment portion comprises:
a moving screw rotatably disposed inside the base support portion in a widthwise direction, passing through the first and second side supports and screw-coupled thereto in opposite directions; and
a screw rotation motor configured to rotate the moving screw.

11. The device of claim 8, wherein the first side support comprises:
a first side support member provided with the first coil portion for XY-axis calibration; and
a first side lifting/lowering portion for raising and lowering the first side support member, whereas
the second side support comprises:
a second side support member provided with the second coil portion for XY-axis calibration; and
a second side lifting/lowering portion for raising and lowering the second side support member.

12. An aerial vehicle station device, comprising:
a station housing portion through an open top of which an aerial vehicle takes off and lands, and provided with a rotary table, rotatable in a horizontal plane, and a pair of sidewall portions, with each unit of the pair erected on each side of the rotary table;
a station open/close portion configured to open and close the open top of the station housing portion;
a first coil portion for XY-axis calibration and a second coil portion for XY-axis calibration positioned to face each other on the sidewall portions;
a first coil portion for Z-axis calibration provided on the rotary table;
a second coil portion for Z-axis calibration positioned on the station open/close portion so as to face the first coil portion for Z-axis calibration;
a geomagnetic sensor configured to measure an Earth's three-axis magnetic field; and
a calibration controller configured to calibrate an onboard navigation sensor in the aerial vehicle by comparing three-axis magnetic field variation values from an electronic compass in the aerial vehicle with Earth's three-axis magnetic field values measured by the geomagnetic sensor.

13. The device of claim 12, wherein the rotary table is provided with a wireless charging portion for charging an aerial vehicle landed thereon.

14. The device of claim 12, wherein by means of the rotary table, an X-axis of the electronic compass is aligned with an axial direction of a magnetic field formed between the first and second coil portions for XY-axis calibration before an X-axis magnetic field variation value of the electronic compass induced by the magnetic field is transmitted to the calibration controller, and after rotating the aerial vehicle by 90 degrees by means of the rotary table to align a Y-axis of the electronic compass with the axial direction of the magnetic field formed between the first and second coil portions for XY-axis calibration, a Y-axis magnetic field variation value of the electronic compass induced by the magnetic field is transmitted to the calibration controller.

15. The device of claim 14, wherein the calibration controller calculates calibration values based on Z-axis, X-axis, and Y-axis magnetic field variation amounts, calculates a relative difference for each axis using the calibration values and Earth's X-axis, Y-axis, and Z-axis magnetic field values, measured by the geomagnetic sensor, and transmits the calibration values and relative difference values to an onboard navigation device of the aerial vehicle, and then the navigation device calibrates the navigation sensor using the received calibration values and relative difference values.

16. The device of claim 12, wherein the sidewall portions are erected and positioned to surround a periphery of a takeoff/landing portion on which the rotary table is rotatably mounted, and
the station open/close portion comprises:
a housing cover member that is seated on upper parts of the sidewall portions to cover the open top of the station housing portion, and on which the second coil portion for Z-axis calibration disposed;
a pair of cover rotation bracket members, with each unit of the pair connected to each lateral end of the housing cover member and positioned to overlap each side surface of the station housing portion;
a cover rotation portion configured to rotate the cover rotation bracket members; and
a cover lifting/lowering portion configured to move the housing cover member up and down from the top of the station housing portion.

17. The device of claim 14, wherein the station open/close portion comprises:
a pair of cover door members rotatable by a door rotation device to open and close the open top of the station housing portion,
wherein the second coil portion for Z-axis calibration is provided in parts distributed respectively on the cover door members, and
the cover door members are respectively provided with, on facing surfaces thereof, a plurality of first coil connection terminals and a plurality of second coil connection terminals to connect divided coils.
